# EUROPEAN PATENT APPLICATION

(11) **EP 4 725 778 A1**
(43) Date of publication of application: **15.04.2026**
(21) Application number: 25208290.4
(22) Date of filing: 13.10.2025
(51) Int. Cl.: B60T 5/00, F16D 65/78, F16D 65/84, F16D 65/847

(54) **ROAD VEHICLE WITH BRAKE COOLING**

(30) Priority: 14.10.2024 IT 202400022845
(71) Applicant: FERRARI S.p.A., 41100 Modena (IT)
(72) Inventor: SCIFO, Alfredo, 41100 Modena (IT); CLERICI, Simone, 41100 Modena (IT); PIOLI, Andrea, 41100 Modena (IT)
(74) Representative: Studio Torta S.p.A.

(57) **Abstract**

A road vehicle has a support frame (2); a passenger compartment (4); a front axle (7) and a rear axle (10); a plurality of wheels (8, 11) mounted on the front axle (7) and on the rear axle (10) and connected to the support frame (2) through the interposition of respective suspensions (9, 12); a braking system (16) provided with at least one brake disc (17) coupled to a wheel (8, 11) in an angularly fixed manner and with a brake caliper (18) associated with the brake disc (17); and a pneumatic cooling circuit (19, 20) provided with an inlet (21, 27) communicating with the external environment and an outlet (22, 28) oriented so as to direct a flow of cooling air, which is fed through the inlet (21, 27) from the external environment, onto the brake disc (17).

## Description

### CROSS-REFERENCE TO RELATED APPLICATIONS

This patent application claims priority from Italian patent application no. 102024000022845 filed on October 14, 2024, the entire disclosure of which is incorporated herein by reference.

### TECHNICAL FIELD

The present invention relates to a road vehicle.

### BACKGROUND

In particular, the present invention relates to a road vehicle of the kind comprising a support frame defining at least part of a lower floor of the road vehicle; a passenger compartment projecting upwards from the lower floor; a front axle provided with a pair of front wheels connected to the support frame through the interposition of respective front suspensions; a rear axle provided with a pair of rear wheels connected to the support frame through the interposition of respective rear suspensions; and a braking system comprising, for each wheel, a respective brake disc coupled to the wheel in an angularly fixed manner and a respective brake caliper associated with the brake disc.

Known road vehicles of the type described above suffer from some drawbacks, which are mainly due to the fact that the braking system, although super-tested, has a relatively reduced efficiency, in particular when the brake discs are made of a carbon-ceramic material.

### SUMMARY

The object of the present invention is to provide a road vehicle that is not affected by the aforementioned drawbacks and can be manufactured in a simple and economic fashion.

According to the present invention, there is provided a road vehicle as claimed in the appended claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the road vehicle according to the invention;
figures 2 and 3 are two schematic perspective views, with parts removed for greater clarity, of a first detail of the road vehicle of figure 1; and
figures 4 and 5 are two schematic perspective views, with parts removed for greater clarity, of a second detail of the road vehicle of figure 1.

### DESCRIPTION OF EMBODIMENTS

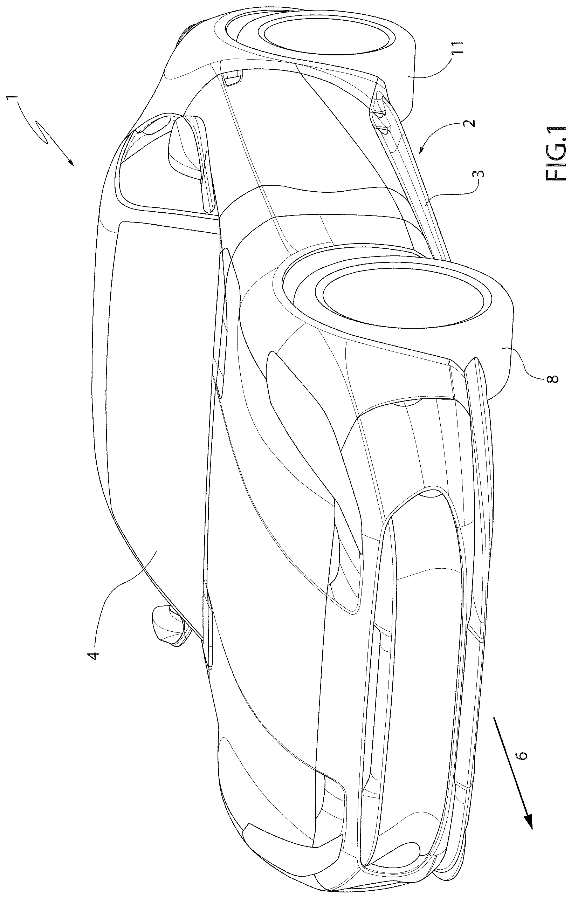

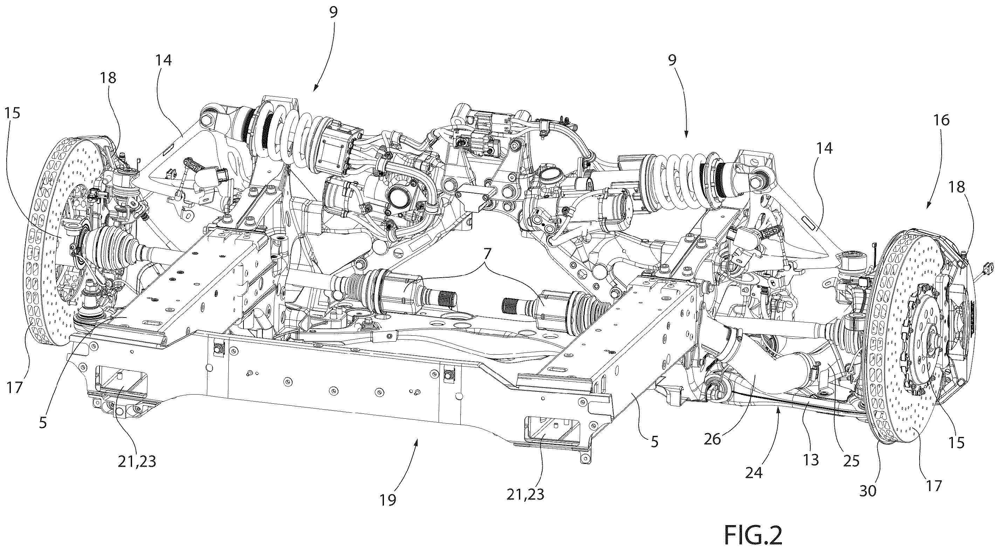

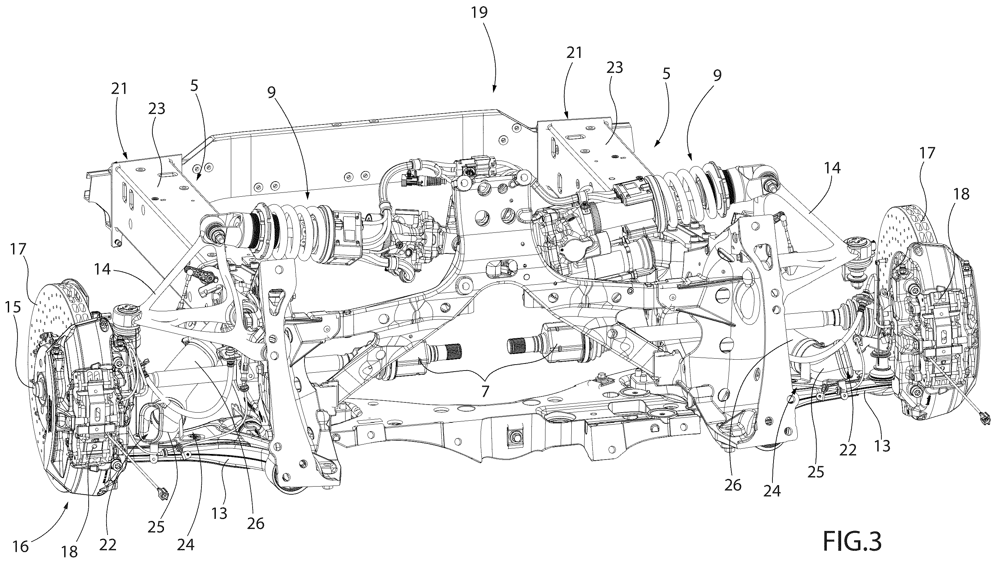

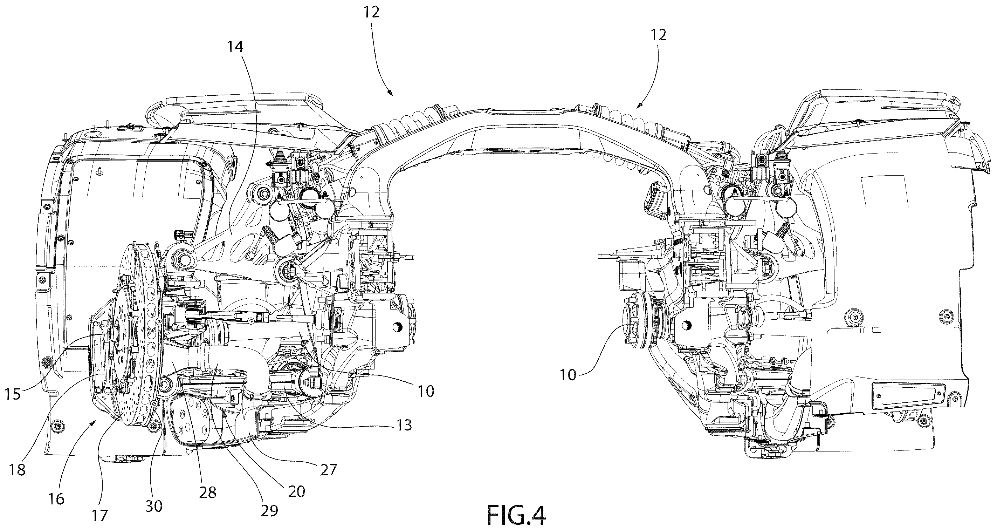

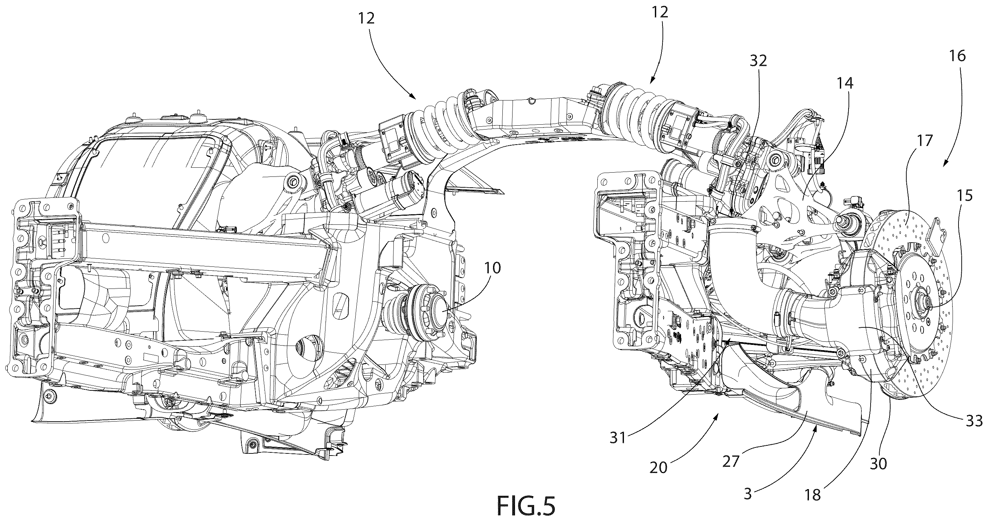

With reference to figures 1 to 5, number 1 indicates, as a whole, a road vehicle comprising a support frame 2 defining at least part of a lower floor 3 of the road vehicle 1 and a passenger compartment 4 mounted on the frame 2 and projecting upwards from the floor 3.

The frame 2 is provided with two front struts 5, which project in front of the passenger compartment 4, extend substantially parallel to a travel direction 6 of the vehicle 1 and support a front axle 7 provided with two front wheels 8, which are mounted on the outside of the struts 5 and are connected to the frame 2 through the interposition of respective front suspensions 9 of the known kind.

The frame 2 further supports a rear axle 10 provided with two rear wheels 11 connected to the frame 2 through the interposition of respective rear suspensions 12.

Each suspension 9, 12 comprises a lower wishbone 13 and an upper wishbone 14 coupled to the frame 2 in a rotary manner and connected to a hub-carrier joint 15 of the relative wheel 8, 11.

The vehicle 1 is further provided with a braking system 16 comprising, for each wheel 8, 11, a respective brake disc 17, in particular made of a carbon-ceramic material, coupled to the wheel 8, 11 in an angularly fixed manner and a respective brake caliper 18 associated with the brake disc 17.

The vehicle 1 further comprises a pneumatic circuit 19 for cooling the brake discs 17 of the front wheels 8 and a pneumatic circuit 20 for cooling the brake discs 17 of the rear wheels 11.

The circuit 19 comprises, for each wheel 8, a respective inlet 21 communicating with the external environment and a respective outlet 22 oriented so as to direct a flow of cooling air fed through the inlet 21 from the external environment onto the relative brake disc 17.

Each inlet 21 is obtained at the end of a relative strut 5 and is connected to the relative outlet 22 by a first segment 23 obtained along and inside the strut 5 and by a second segment 24 comprising an outlet mouth 25 fixed to the lower wishbone 13 of the relative front suspension 9 and a flexible duct 26 interposed between the strut 5 and the mouth 25.

The circuit 20 comprises, for each wheel 11, a respective inlet mouth 27 obtained through the floor 3, a respective outlet mouth 28 oriented so as to direct a flow of cooling air fed through the inlet mouth 27 from the external environment onto the relative brake disc 17 and a respective flexible duct 29 interposed between the mouths 27 and 28.

The mouth 28 is fixed to a protection plate 30, which faces at least part of the brake disc 17 to protect it against contaminating agents and to forbid the dispersion of the heat generated by the brake disc 17 and has an opening (not shown) made through the plate 30 in the area of the mouth 28 to allow the flow of cooling air fed along the duct 29 to reach the brake disc 17.

With regard to what described above, it should be pointed out that the cooling air flows fed through the outlet mouths 25 of the circuit 19 and the outlet mouths 28 of the circuit 20 are subsequently fed along a plurality of channels obtained both axially and radially through the brake discs 17.

The vehicle 1 further comprises a further pneumatic cooling circuit 31 for cooling at least the brake calipers 18 of the rear wheels 11.

The circuit 31 comprises, for each wheel 11, a respective inlet 32, which communicates with the external environment and is obtained in the area of a heat exchanger (not shown) mounted so as to cool an air stream fed by a turbocharger (not shown) to an internal combustion engine (not shown) of the vehicle 1.

The circuit 31 further comprises, for each wheel 11, a respective outlet 33 oriented so as to direct a flow of cooling air fed through the inlet 32 from the external environment onto the relative brake caliper 18.

The pneumatic cooling circuits 19, 20 offer several advantages that are mainly due to the fact that:
the friction coefficient between the brake discs 17 and the relative brake calipers 18 is relatively stable and even;
the wear of the brake discs 17 and of the pads (not shown) of the relative brake calipers 18 is relatively small; and
the braking system 16 has a relatively reduced noise.

## Claims

1. A road vehicle comprising a support frame (2); a passenger compartment (4); a front axle (7); a rear axle (10); a plurality of wheels (8, 11) mounted on the front axle (7) and on the rear axle (10) and connected to the support frame (2) through the interposition of respective suspensions (9, 12); and a braking system (16) comprising at least one brake disc (17) coupled to a wheel (8, 11) in an angularly fixed manner and a brake caliper (18) associated with the brake disc (17); and **characterized in that** it further comprises a pneumatic cooling circuit (19, 20) provided with an inlet (21, 27) communicating with the external environment and an outlet (22, 28) oriented so as to direct a flow of cooling air, which is fed through the inlet (21, 27) from the external environment, onto the brake disc (17).

2. The road vehicle according to claim 1, wherein the pneumatic cooling circuit (19) comprises a first segment (23) obtained through the support frame (2) and provided with said inlet (21) and a second segment (24) obtained outside the support frame (2) and provided with said outlet (22).

3. The road vehicle according to claim 2, wherein the support frame (2) comprises a pair of front struts (5), which protrude from the passenger compartment (4) to support the front axle (7); the first segment (23) of the pneumatic cooling circuit (19) being obtained through a front strut (5) .

4. The road vehicle according to claim 2 or 3, wherein the second segment (24) comprises an outlet mouth (25) fixed to the suspension (9) of the wheel (8) and a flexible duct (26) interposed between the front strut (5) and the outlet mouth (25).

5. The road vehicle according to claim 4, wherein the suspension (9) comprises a lower wishbone (13) and an upper wishbone (14), which are connected to the support frame (2) in a rotary manner; the outlet mouth (25) being fixed to the lower wishbone (13).

6. The road vehicle according to claim 1, wherein the braking system (16) further comprises a protection plate (30) for the brake disc (17) facing at least part of the brake disc (17); the outlet (28) of the pneumatic cooling circuit (20) being obtained through the protection plate (30).

7. The road vehicle according to claim 6 and further comprising an aerodynamic bottom defining at least part of a lower floor (3) of the road vehicle; the inlet (27) of the pneumatic cooling circuit (20) being obtained through the aerodynamic bottom (3) of the road vehicle.

8. The road vehicle according to claim 6 or 7, wherein the pneumatic cooling circuit (20) comprises a flexible duct (29) to connect the inlet (27) and the outlet (28) to one another.

9. The road vehicle according to any one of the preceding claims and further comprising a further pneumatic cooling circuit (31) to cool the brake caliper (18).

10. The road vehicle according to claim 9 and further comprising an internal combustion engine, a turbocharger and a heat exchanger to cool an air flow fed from the turbocharger to the internal combustion engine; said further pneumatic cooling circuit (31) comprising a further inlet (32) obtained in the area of the heat exchanger and communicating with the external environment and a further outlet (33) oriented so as to direct a further flow of cooling air, which is fed through the further inlet (32) from the external environment, onto the brake caliper (18).
